# EUROPEAN PATENT SPECIFICATION

(11) **EP 1 080 374 B1**
(45) Date of publication and mention of the grant of the patent: **18.12.2002**
(21) Application number: 99922356.3
(22) Date of filing: 19.05.1999
(51) Int. Cl.: G01P 3/486, G01D 5/347, H04N 1/053, G02B 26/12

(54) **ROTARY SHAFT SPEED CONTROL**
GESCHWINDIGKEITSKONTROLLE FÜR DREHENDE WELLE
REGULATEUR DE VITESSE D'ARBRE DE ROTATION

(30) Priority: 20.05.1998 GB 9810864
(43) Date of publication of application: 07.03.2001
(73) Proprietor: WESTWIND AIR BEARINGS LIMITED, Poole, Dorset BH16 6LN (GB)
(72) Inventor: EVEREST, John Graham, Poole, Dorset BH16 6DN (GB)
(74) Representative: Faulkner, Thomas John
(86) International application number: GB9901584
(87) International publication number: WO99060412

(56) References cited:
- EP-A- 0 709 708
- DE-A- 2 343 648
- FR-A- 2 635 873
- US-A- 5 734 108

## Description

This invention relates to rotary apparatus, such as rotary scanners, where a high degree of accuracy is required in relation to speed control and to methods of manufacturing such apparatus. The invention also relates to rotary apparatus for other purposes than scanning and where a high degree of speed control and rotational position accuracy is required and to methods of manufacturing such apparatus.

High speed rotary shafts or spindles are used on laser scanners for high quality image production, by the so-called image setting process. The scanner spindle rotates a mirror polygon or prism causing an incident laser beam to be directed onto the medium used in production of the image. For the production of ultra high quality images it is important to use a feed back control based on the rotational position of the optic, i.e. the mirror polygon prism. This is currently achieved by mounting a rotatable optical encoder at the opposite end of the spindle to that at which the optic is mounted and then taking a signal from this optical encoder in order to provide the feedback control. This optical encoder will generally consist of a disc having about 2,500 lines printed on it, so that the position of the shaft can be established at any stage of rotation.

Problems have been experienced on scanners which can be attributable to the mounting of the encoder. The encoder in the form of the disc is assembled externally to the scanner spindle with squareness and concentricity tolerances being dependent on various manufacturing tolerances, quality of build and final assembly. This can lead to a disadvantageous situation where the encoder disc does not run "true" to the axis of the spindle both with regard to concentricity and parallelism. This manifests itself in yielding false readings from the encoder output due to encoder mounting inaccuracies.

US 5734108 discloses a system for sensing shaft displacement and strain. The system comprises a means for rotating a shaft and detecting its speed and using feedback control to maintain the shaft at a controlled speed. The feedback control is arranged to scan marks imprinted on the shaft in order to sense the rotational position of the shaft.

US 5734108 also discloses a method for positioning the marks on the shaft by use of photo-sensitive emulsion and a strobe light.

An aim of the present invention is to provide a rotary shaft with feedback control which overcomes the above described problems.

According to a first aspect of the present invention there is provided a rotary apparatus having a rotary shaft assembly, means for rotating said shaft assembly at a controlled speed, means for sensing the speed of said shaft assembly and a feedback control for maintaining said shaft assembly at said controlled speed, wherein said shaft assembly comprises a plurality of location marks directly imprinted on said shaft assembly during rotation and located around said shaft assembly at substantially uniformly spaced intervals, and said feedback control is arranged to scan said marks in order to provide a continuous sensing of the rotational position of the shaft assembly characterised in that the rotary shaft assembly has a thermoplastic coating on at least a peripheral area, and the applied marks are present on that coating in CD read-write form.

According to a second aspect of the present invention there is provided a method of manufacturing a rotary apparatus having a rotary shaft assembly having a plurality of associated location marks for synchronised control of rotary operations of said shaft assembly comprising the steps of:
directly imprinting the plurality of location marks on the shaft assembly at locations around and on said shaft assembly and rotating the shaft assembly whilst imprinting the marks, and characterised by the further steps of applying a thermoplastic coating to the shaft before the step of imprinting the marks and applying data in CD read-write form.

By the term shaft assembly we mean a shaft or spindle on its own or when including components such as mirrors, discs or other devices which may be integral with or assembled to the shaft as a unit which rotates together with that shaft.

By applying the marks to the shaft assembly during rotation it is possible for the marks to have rotational symmetry even though the shaft assembly itself may be out of true. A development of the invention comprises an apparatus having a rotary shaft assembly incorporating a plurality of imprinted marks having uniform spacing and rotary symmetry at a high level of accuracy, or at a higher level of accuracy than that, in terms of centricity, of the shaft assembly carrying said marks.

The marks may be imprinted by a stream of pulses from a laser beam as the shaft assembly is rotated relative to said laser beam. Generally a single circle of data, caused by a single rotation of the shaft assembly relative to the laser beam, is all that is necessary, although more than one concentric circle can be applied if desired - for example one circle may incorporate equi-spaced uniform, data and a second circle may have a single mark to provide start position orientation. It is preferred however to have a single circle of data where the pulses are uniform in spacing but include encryption to enable the angular location for various control events to be established at different positions of rotation. Also several circles may be included to provide data for different usage calibrations.

The rotary shaft assembly having a thermoplastic coating at least on a peripheral area, and the laser beam applying data to that coating in CD read-write form enables the data to be re-written if circumstances dictate. For example the shaft assembly may need recalibration for a different application.

The encoder lines can be written directly onto the outer diameter of a scanner shaft or spindle prior to assembly of the mirror components if desired, and preferably, the circumferential encoder lines will be written on the circumferential surface by a laser, while the rotary shaft is in rotation. This enables imperfections in rotational symmetry of the shaft to be taken account of. While the curved outer surface of the shaft is a preferred location for the marks, they may be located on a circular peripheral path at the outer edge of an end face of the shaft assembly if desired.

According to a third aspect of the present invention there is provided a method of manufacturing a rotary apparatus having a rotary shaft assembly having a plurality of associated location marks for synchronised control of rotary operations of said shaft assembly
characterised by the steps of:
directly imprinting the plurality of location marks on the shaft assembly at locations around and on said shaft assembly and rotating the shaft assembly at a normal operating speed whilst imprinting the marks.

An embodiment of the invention will now be described, by way of example only, with reference to the accompanying drawings in which:
Figure 1 is a cross-section of a spindle and an associated encoder read-out assembly;
Figure 2 is an enlarged fragmentary view of part of the spindle cross-section; and
Figures 3, 4 and 5 show schematic diagrams of various feedback control systems utilising the invention.

The optical scanner comprises a spindle 1 shown in cross-section which includes encoder markings arranged to form circumferential, i.e. hoop-like, lines of marks on the circumferential surface (see Figure 2). A conventional laser scanner for a high quality image setting assembly (not shown) includes a rotary mirror which is mounted on the spindle 1 while another part of the spindle is exposed to an encoder read-out assembly 2.

The encoder read-out assembly includes a laser diode 3 whose energy is directed onto a first reflecting surface 4 of a 90° prism 5 and thence to the periphery of the shaft where it scans the encoder markings, sending back an image via a second reflecting surface 6 of the mirror and thence onto a pin photodiode 7. The output from the pin photodiode is then used for feedback control of the image setting assembly.

The encoder markings are provided during production of the shaft. The spindle 1 is rotated at a predetermined speed within the speed range required. A low cost CD ROM laser writer is arranged radially of the spindle so that operation of the laser etches circumferential encoder lines on the circumference of the spindle 1 as one or more hoops concentric to its longitudinal axis. The encoding of the radial surface of the spindle 1 may be made at any convenient position along the length of the spindle.

The encoded lines are etched while the spindle is rotated at a normal operating speed thereby overcoming the dynamic effect of the spindle when in operation.

All encoded lines are concentric with the spindle axis and readings taken from the output of the encoded lines will be a true and accurate representation of the rotational motion of the scanner spindle and optic with regard to both concentricity and parallelism.

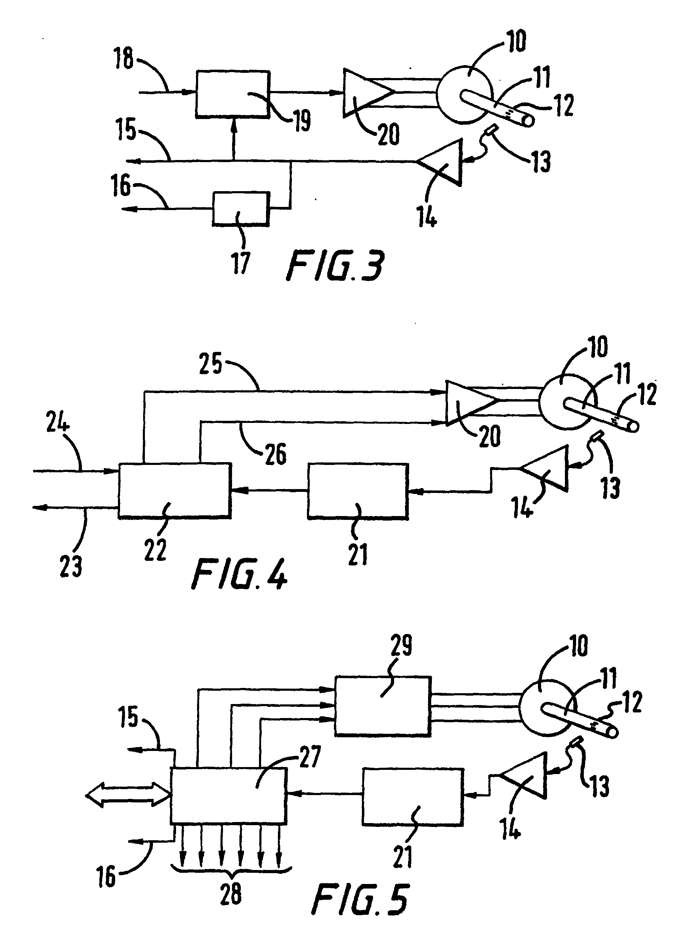

Reference is now made to Figures 3, 4 and 5 which show schematic diagrams illustrating various feedback control systems utilising the invention.

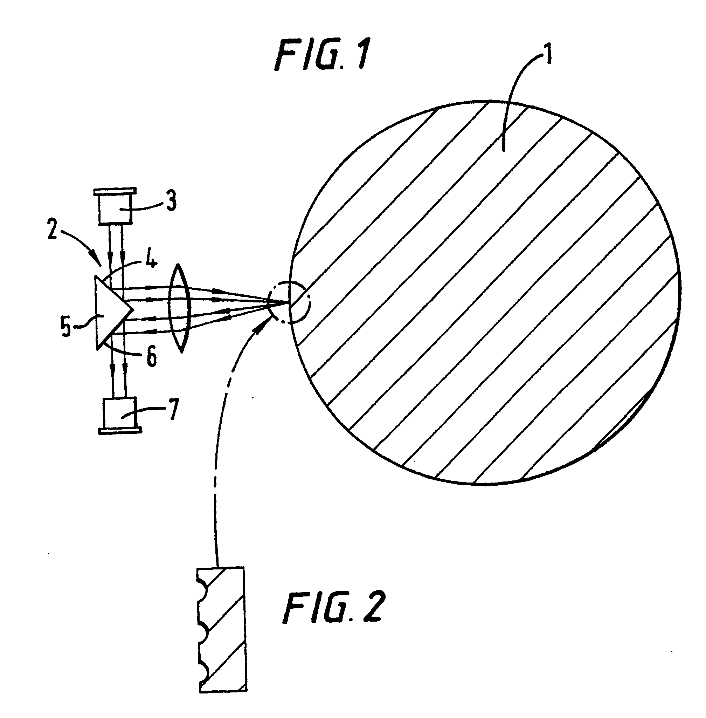

Referring to Figure 3, a motor 10 has a shaft 11 incorporating a circle of marks 12 which have been imprinted by the apparatus of Figure 1. A detector 13 in the same position reads the marks and feeds a signal to a detector amplifier 14. This then provides a first output 15 which is a measure of the actual speed of the shaft and a second output 16 which has been subject to filtration in a filter 17 to provide an indexed output of a signal at the same position once per revolution. The actual speed and a speed control signal 18 from the amplifier 14 are fed into a speed control unit 19 and from that unit to a motor inverter amplifier 20 which then provides feedback signals to the motor to ensure that it remains at a precisely controlled speed.

Figure 4 shows a modification of the arrangement of Figure 3 which enables position control to be achieved. In this case the position of items carried on the shaft such as mirrors may need to be established accurately to enable a scanning process to be fully controlled. The marks on the shaft are in this case provided with encrypted information so that the positions of different angles of rotation on the shaft can be established. Data is then fed from the detector 14 to a position decoder 21 which establishes the position of the item whose position is required. The signal from the position decoder unit 21 is then fed to a position controller 22. An output actual position indicator signal 23 is fed out from the position controller 22 while a position reference signal is fed in via an input 24. The position controller 22 then analyses the data and provides a feedback of position control and direction via signal paths 25 and 26 respectively which feed into the inverter amplifier 20.

Figure 5 then shows an arrangement where both position and speed control are effected by combining various features from the Figure 3 and 4 arrangements.

In this case the position detector 21 feeds its output to a programmable event controller 27 which then has actual speed and index outputs 15 and 16 as in the Figure 3 example, and various outputs 28 for controlling events which are dependent on rotation of the shaft 11.

There are then three feedback signals from the controller 27 dependent on speed, position and direction which are fed into a motor amplifier/controller for control of rotation of the motor 10. Dependent on the kind of motor used, the feedback signals should be appropriate for control of an AC induction motor, a brushless DC commutator motor, or an AC synchronous motor.

A major advantage of the above described embodiments of the invention is that the encoder markings have rotational symmetry so as to provide a true read-out of the rotational position of the shaft, and the arrangement is particularly simple and cost efficient to manufacture to a high level of accuracy.

It will be appreciated that more than one encoder layout can be written onto the spindle the selection of layout being dependent on the customer's requirements and application.

Any other data that may be required when carrying out the scanning operation, can be stored with the encoded lines for reading as and when required.

## Claims

1. A rotary apparatus having a rotary shaft assembly, means for rotating said shaft assembly at a controlled speed, means for sensing the speed of said shaft assembly and a feedback control for maintaining said shaft assembly at said controlled speed,
wherein said shaft assembly comprises a plurality of location marks (12) directly imprinted on said shaft assembly during rotation and located around said shaft assembly at substantially uniformly spaced intervals, and said feedback control is arranged to scan said marks (12)in order to provide a continuous sensing of the rotational position of the shaft assembly **characterised in that** the rotary shaft assembly has a thermoplastic coating on at least a peripheral area, and the applied marks are present on that coating in CD read-write form.

2. A rotary apparatus according to claim 1 comprising a single circle of data, caused by a single rotation of the shaft assembly relative to a laser beam which etched said data.

3. A rotary apparatus according to claim 1 comprising a pair of circles of data, caused by two rotations of the shaft assembly relative to a laser beam which etched said data, one of which incorporates equi-spaced uniform, data and the other incorporates a single mark to provide start position orientation.

4. A rotary apparatus according to claim 1 comprising a single circle of pulses of data where the pulses are uniform in spacing but include encryption to enable the angular location for various control events to be established at different positions of rotation.

5. A rotary apparatus according to any preceding claim comprising a plurality of circles of pulses to provide data for different usage calibrations.

6. A rotary apparatus according to any preceding claim in which the rotary shaft assembly has the encoder lines written directly onto the outer diameter of a scanner shaft (11) or spindle (1) prior to assembly of the mirror components.

7. A rotary apparatus according to any preceding claim in which the rotary shaft assembly has circumferential encoder lines written on its circumferential surface by a laser, while the rotary shaft is in rotation.

8. A rotary apparatus according to any of claims 1 to 6 in which the rotary shaft assembly has circumferential encoder lines written by a laser on a circular peripheral path at the outer edge of an end face of the shaft assembly.

9. A rotary apparatus according to any preceding claim, the shaft assembly having been rotated at a normal operational speed during imprinting of the marks.

10. A rotary apparatus according to any preceding claim wherein the rotary apparatus is a rotary scanner.

11. A method of manufacturing a rotary apparatus having a rotary shaft assembly having a plurality of associated location marks (12) for synchronised control of rotary operations of said shaft assembly comprising the steps of:
directly imprinting the plurality of location marks (12) on the shaft assembly at locations around and on said shaft assembly and rotating the shaft assembly whilst imprinting the marks (12), and
**characterised by** the further steps of applying a thermoplastic coating to the shaft before the step of imprinting the marks and applying data in CD read-write form.

12. A method according to Claim 11 **characterised by** the further step of using a laser beam to imprint the location marks (12).

13. A method according to Claim 11 or 12 **characterised by** the step of rotating the shaft (11) at a normal operational speed during imprinting of the marks (12).

14. A method of manufacturing a rotary apparatus having a rotary shaft assembly having a plurality of associated location marks (12) for synchronised control of rotary operations of said shaft assembly **characterised by** the steps of:
directly imprinting the plurality of location marks (12) on the shaft assembly at locations around and on said shaft assembly and rotating the shaft assembly at a normal operating speed whilst imprinting the marks (12).

15. A method according to Claim 14 **characterised by** the further step of using a laser beam to imprint the location marks (12).

16. A method according to Claim 14 or 15 **characterised by** the steps of applying a thermoplastic coating to the shaft before the step of imprinting the marks and applying the data in CD read-write form.

17. A method according to any one of claims 11 to 16
wherein the rotary apparatus is a rotary scanner.

## Patentansprüche

1. Drehvorrichtung mit einer Drehwellenbaugruppe, einer Einrichtung zum Drehen der Wellenbaugruppe mit einer gesteuerten Drehzahl, einer Einrichtung zur Erfassung der Drehzahl der Wellenbaugruppe und eine Rückführsteuerung zum Halten der Wellenbaugruppe auf der gesteuerten Geschwindigkeit, wobei die Wellenbaugruppe mehrere bei der Drehung direkt auf die Wellenbaugruppe geprägte und in im wesentlichen gleichmäßig beabstandeten Intervallen um die Wellenbaugruppe angeordnete Positionsmarkierungen (12) aufweist und die Rückführsteuerung so beschaffen ist, daß sie die Markierungen (12) abtastet, um eine kontinuierliche Erfassung der Drehstellung der Wellenbaugruppe zu liefern, **dadurch gekennzeichnet, daß** die Drehwellenbaugruppe zumindest auf einem Umfangsbereich eine Plastomerbeschichtung aufweist und die angebrachten Markierungen sich in CD-Lese-Schreib-Form auf der Beschichtung befinden.

2. Drehvorrichtung nach Anspruch 1 mit einem einzigen Kreis aus Daten, die durch eine einzige Drehung der Wellenbaugruppe in bezug auf einen Laserstrahl angebracht wurden, durch den die Daten eingeätzt wurden.

3. Drehvorrichtung nach Anspruch 1 mit zwei Datenkreisen, die durch zwei Drehungen der Wellenbaugruppe in bezug auf einen Laserstrahl aufgebracht wurden, durch den die Daten eingeätzt wurden, wobei einer gleichmäßige Daten in gleichen Abständen und der andere eine einzige Markierung enthält, um eine Orientierung bezüglich der Anfangsposition zu liefern.

4. Drehvorrichtung nach Anspruch 1 mit einem einzigen Datenimpulskreis, wobei die Impulse gleichmäßig beabstandet sind, jedoch eine Verschlüsselung enthalten, um für verschiedene Steuervorgänge in unterschiedlichen Drehstellungen die Bestimmung der Winkelposition zu ermöglichen.

5. Drehvorrichtung nach einem der vorhergehenden Ansprüche mit mehreren Impulskreisen zum Liefern von Daten für verschiedene Nutzungskalibrierungen.

6. Drehvorrichtung nach einem der vorhergehenden Ansprüche, bei der die Verschlüsselungszeilen vor dem Zusammenbau der Spiegelbauteile direkt auf den Außendurchmesser einer Bildabtasterwelle (11) oder Spindel (1) der Drehwellenbaugruppe geschrieben werden.

7. Drehvorrichtung nach einem der vorhergehenden Ansprüche, bei der die Umfangsverschlüsselungszeilen durch einen Laser auf die Umfangsfläche der Drehwellenbaugruppe geschrieben werden, während sich die Drehwelle dreht.

8. Drehvorrichtung nach einem der Ansprüche 1 bis 6, bei der die Umfangsverschlüsselungszeilen durch einen Laser auf einen kreisförmigen Pfad um den Umfang an der Außenkante einer Endfläche der Drehwellenbaugruppe geschrieben werden.

9. Drehvorrichtung nach einem der vorhergehenden Ansprüche, bei der die Wellenbaugruppe beim Aufdrucken der Markierungen mit einer normalen Betriebsdrehzahl gedreht wurde.

10. Drehvorrichtung nach einem der vorhergehenden Ansprüche, bei der die Drehvorrichtung eine rotierende Abtastvorrichtung ist.

11. Verfahren zur Herstellung einer Drehvorrichtung mit einer Drehwellenbaugruppe mit mehreren zugehörigen Positionsmarkierungen (12) zur synchronisierten Steuerung von Drehvorgängen der Wellenbaugruppe mit den Schritten:
des direkten Prägens der mehreren Positionsmarkierungen (12) auf die Wellenbaugruppe an Positionen um und auf der Wellenbaugruppe und des Drehens der Wellenbaugruppe beim Prägen der Markierungen (12), **gekennzeichnet durch** die weiteren Schritte des Aufbringens einer Plastomerbeschichtung auf der Welle vor dem Schritt des Prägens der Markierungen und des Aufbringens von Daten in einer CD-Lese-Schreib-Form.

12. Verfahren nach Anspruch 11, **gekennzeichnet durch** den weiteren Schritt der Verwendung eines Laserstrahls zum Aufbringen der Positionsmarkierungen (12).

13. Verfahren nach Anspruch 11 oder 12, **gekennzeichnet durch** den Schritt des Drehens der Welle (11) mit einer normalen Betriebsdrehzahl beim Aufbringen der Markierungen (12).

14. Verfahren zur Herstellung einer Drehvorrichtung mit einer Drehwellenbaugruppe mit mehreren zugehörigen Positionsmarkierungen (12) zur synchronisierten Steuerung von Drehvorgängen der Wellenbaugruppe, **gekennzeichnet durch** die Schritte:
direktes Prägen der mehreren Positionsmarkierungen (12) auf die Wellenbaugruppe an Positionen um und auf die Wellenbaugruppe und Drehen der Wellenbaugruppe mit einer normalen Betriebsdrehzahl beim Aufbringen der Markierungen (12).

15. Verfahren nach Anspruch 14, **gekennzeichnet durch** den weiteren Schritt der Verwendung eines Laserstrahls zum Aufbringen der Positionsmarkierungen (12).

16. Verfahren nach Anspruch 14 oder 15, **gekennzeichnet durch** die Schritte des Aufbringens einer Plastomerbeschichtung auf der Welle vor dem Schritt des Prägens der Markierungen und des Aufbringes der Daten in CD-Lese-Schreib-Form.

17. Verfahren nach einem der Ansprüche 11 bis 16, bei dem die Drehvorrichtung eine rotierende Abtastvorrichtung ist.

## Revendications

1. Appareil rotatif ayant un ensemble axe rotatif, un moyen permettant de tourner ledit ensemble axe à une vitesse contrôlée, un moyen pour détecter la vitesse dudit ensemble axe et une commande de rétroaction permettant de maintenir ledit ensemble axe à ladite vitesse contrôlée, dans lequel ledit ensemble axe comprend une pluralité de marques de repérage (12) qui sont directement imprimées sur ledit ensemble axe pendant la rotation et positionnées autour dudit ensemble axe selon des intervalles dont l'espacement est essentiellement uniforme, et ladite commande de rétroaction est agencée de manière à scanner lesdites marques (12) afin de fournir une détection continue de la position rotationnelle de l'ensemble axe, **caractérisé en ce que** l'ensemble axe rotatif possède un revêtement thermoplastique sur une zone périphérique au moins, et les marques appliquées sont présentés sur ce revêtement en format CD lisible et réinscriptible.

2. Appareil rotatif, selon la revendication 1, comprenant un seul cercle de données, causé par une seule rotation de l'ensemble axe par rapport à un faisceau laser qui a gravé lesdites données.

3. Appareil rotatif, selon la revendication 1, comprenant une paire de cercles de données, causée par deux rotations de l'ensemble axe par rapport à un faisceau laser qui a gravé lesdites données, dont l'un incorpore des données uniformes équidistantes les unes des autres, et dont l'autre incorpore une seule marque destinée à fournir l'orientati de la position de départ.

4. Appareil rotatif, selon la revendication 1, comprenant un seul cercle d'impulsions de données, dans lequel les impulsions ont un espacement uniforme, mais incluent un codage pour permettre d'établir le repérage angulaire pour les divers événements de commande à différentes positions de rotation.

5. Appareil rotatif, selon l'une quelconque des revendications précédentes, comprenant une pluralité de cercles d'impulsions afin de fournir des données pour des calibrages d'usages différents.

6. Appareil rotatif, selon l'une quelconque des revendications précédentes, dans lequel l'ensemble axe rotatif présente des lignes de codeur qui sont écrites directement sur le diamètre externe d'un axe de scanner (11) ou d'une broche (1) avant l'assemblage des composants du miroir.

7. Appareil rotatif, selon l'une quelconque des revendications précédentes, dans lequel l'ensemble axe rotatif présente des lignes de codeur circonférentielles qui sont écrites sur sa surface circonférentielles par un laser, pendant que l'axe rotatif est en rotation.

8. Appareil rotatif, selon l'une quelconque des revendications 1 à 6, dans lequel l'ensemble axe rotatif présente des lignes de codeur circonférentielles qui sont écrites par un laser sur un trajet périphérique circulaire au niveau du bord externe d'une face d'extrémité de l'ensemble axe.

9. Appareil rotatif, selon l'une quelconque des revendications précédentes, l'ensemble axe ayant été tourné à une vitesse opérationnelle normale pendant l'impression des marques.

10. Appareil rotatif, selon l'une quelconque des revendications précédentes, dans lequel l'appareil rotatif est un scanner rotatif.

11. Procédé de fabrication d'un appareil rotatif possédant un ensemble axe rotatif muni d'une pluralité de marques de repérage (12) qui lui sont associées, en vue d'une commande synchronisée des opérations rotatives dudit ensemble axe comprenant les étapes suivantes :
impression directe de la pluralité des marques de repérage (12) sur l'ensemble axe au niveau d'emplacements situés sur le pourtour dudit ensemble axe, et sur ce dernier, ainsi que la rotation de l'ensemble axe au cours de l'impression des marques (12), et **caractérisé par** les étapes supplémentaires consistant à appliquer un revêtement thermoplastique sur l'axe avant l'étape consistant à imprimer les marques et à appliquer les données en format CD lisible et réinscriptible.

12. Procédé, selon la revendication 11, **caractérisé par** l'étape supplémentaire consistant à utiliser un faisceau laser pour imprimer les marques de repérage (12).

13. Procédé, selon la revendication 11 ou 12, **caractérisé par** l'étape consistant à faire tourner l'axe (11) à une vitesse opérationnelle normale pendant l'impression des marques (12).

14. Procédé de fabrication d'un appareil rotatif possédant un ensemble axe rotatif muni d'une pluralité de marques de repérage (12) qui lui sont associées, en vue d'une commande synchronisée des opérations rotatives dudit ensemble axe, **caractérisé par** les étapes suivantes:
impression directe de la pluralité des marques de repérage (12) sur l'ensemble axe au niveau d'emplacements situés sur le pourtour dudit ensemble axe, et sur ce dernier, ainsi que la rotation de l'ensemble axe à une vitesse opérationnelle normale pendant l'impression des marques (12).

15. Procédé, selon la revendication 14, **caractérisé par** l'étape supplémentaire consistant à utiliser un faisceau laser pour imprimer les marques de repérage (12).

16. Procédé, selon la revendication 14 ou 15, **caractérisé par** les étapes consistant à appliquer un revêtement thermoplastique sur l'axe avant l'étape consistant à imprimer les marques et à appliquer les données en format CD lisible et réinscriptible

17. Procédé, selon l'une quelconque des revendications 11 à 16, dans lequel l'appareil rotatif est un scanner rotatif.
